Europäisches Patentamt

(19) European Patent Office

Office européen des brevets

(11) EP 0 840 708 B1

## (12) FASCICULE DE BREVET EUROPEEN

(45) Date de publication et mention
de la délivrance du brevet:
**11.08.1999 Bulletin 1999/32**

(21) Numéro de dépôt: **97925101.4**

(22) Date de dépôt: **16.05.1997**

(51) Int. Cl.$^6$: **C01B 3/56**

(86) Numéro de dépôt international:
**PCT/FR97/00878**

(87) Numéro de publication internationale:
**WO 97/45363 (04.12.1997 Gazette 1997/52)**

(54) **PROCEDE POUR LA PURIFICATION DE MELANGES GAZEUX A BASE D'HYDROGE NE UTILISANT UNE ZEOLITE X ECHANGEE AU LITHIUM**

VERFAHREN ZUR REINIGUNG VON AUF WASSERSTOFF BASIERENDEN GASMISCHUNGEN MIT HILFE VON LITHIUM AUSGETAUSCHTEM X TYP-ZEOLITH

METHOD FOR PURIFYING HYDROGEN BASED GAS MIXTURES USING A LITHIUM EXCHANGED X ZEOLITE

(84) Etats contractants désignés:
**BE DE FR NL**

(30) Priorité: **24.05.1996 FR 9606516**

(43) Date de publication de la demande:
**13.05.1998 Bulletin 1998/20**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **BOMARD, Olivier
  F-78280 Guyancourt (FR)**
• **JUTARD, Jérôme
  F-37520 La Riche (FR)**
• **MOREAU, Serge
  F-78140 Vélizy Villacoublay (FR)**

• **VIGOR, Xavier
  F-75015 Paris (FR)**

(74) Mandataire: **Le Moenner, Gabriel
  L'AIR LIQUIDE, Société Anonyme
  pour l'étude et l'exploitation des procédés
  Georges Claude
  75, Quai d'Orsay
  75321 Paris Cédex 07 (FR)**

(56) Documents cités:
**EP-A- 0 297 542          EP-A- 0 311 932
US-A- 3 430 418           US-A- 4 957 514
US-A- 5 152 813**

• **DATABASE WPI Section Ch, Week 8807 Derwent
  Publications Ltd., London, GB; Class E36, AN
  88-046752 XP002023748 & JP 63 004 824 A
  (TOYO SODA MFG KK) , 9 Janvier 1988**

**Description**

L'invention concerne un procédé pour la purification de mélanges gazeux à base d'hydrogène, pollués par diverses impuretés, dont du monoxyde de carbone et au moins une autre impureté choisie parmi le dioxyde de carbone et les hydrocarbures linéaires, ramifiés ou cycliques, saturés ou insaturés en $C_1$-$C_8$.

Le procédé de l'invention permet notamment le perfectionnement des procédés conventionnels de séparation de l'hydrogène de type PSA, ou procédés par adsorption par variation de la pression, utilisant des zéolites en tant qu'adsorbant.

La production d'hydrogène de grande pureté est d'un grand intérêt sur le plan industriel, celui-ci étant largement utilisé dans de nombreux procédés de synthèses tels que l'hydrocraquage, la production de méthanol, la production d'oxoalcools et les procédés d'isomérisation. Dans la technique antérieure, les procédés PSA se sont révélés très efficaces pour la séparation de mélanges gazeux et notamment pour la production d'hydrogène ou d'oxygène pur à partir de mélanges gazeux contaminés par diverses impuretés. Les procédés PSA mettent à profit la sélectivité d'adsorption d'un adsorbant donné pour une ou plusieurs des substances contaminantes du mélange gazeux à purifier.

Le choix de l'adsorbant est délicat : il dépend d'une part de la nature du mélange à traiter. En règle générale les adsorbants sont sélectionnés en fonction de leur facilité à adsorber et à désorber un composé particulier. De fait, les procédés PSA impliquent la mise en oeuvre de cycles de pression. Dans une première phase, le lit d'adsorbant assure la séparation d'au moins un constituant du mélange par adsorption de ce constituant sur le lit d'adsorbant. Dans une deuxième phase l'adsorbant est régénéré par abaissement de la pression. A chaque nouveau cycle il est donc essentiel que la désorption soit efficace et complète, de manière à retrouver un état régénéré identique à chaque nouveau cycle. Il est clair cependant que cette facilité à adsorber puis désorber un constituant particulier d'un mélange gazeux est fonction des conditions opératoires particulières du procédé PSA envisagé et notamment des conditions de températures et de pression.

Une distinction doit donc être faite entre les procédés PSA destinés à la production d'oxygène, lesquels fonctionnent généralement à des pressions d'adsorption inférieures à $5.10^5$ Pa, et les procédés PSA destinés à la production d'hydrogène, lesquels peuvent mettre en jeu des pressions d'adsorption comprises entre $5.10^5$ et $70.10^5$ Pa.

Toutefois, dans la mesure où le mélange à purifier comprend généralement plus d'une impureté, il est souhaitable que l'adsorbant puisse adsorber puis désorber, non pas une seule, mais plusieurs de ces impuretés.

Or, le profil et la sélectivité d'adsorption d'un constituant donné sont souvent influencés par la présence, dans le mélange gazeux, d'autres impuretés, et ceci, par exemple, en raison d'une éventuelle compétition ou d'un empoisonnement de l'adsorbant.

Ces différentes considérations rendent compte de la complexité du problème de l'optimisation des procédés PSA par amélioration de l'adsorbant.

Des études récentes ont montré que dans le cas de mélanges contenant de l'azote, de l'oxygène, de l'hydrogène, du méthane et de l'argon ou de l'hélium, les zéolites échangées au lithium permettent une nette amélioration des performances. Il résulte notamment des différents travaux de recherche effectués, que les critères de sélection à prendre en compte pour le choix de l'adsorbant sont sa capacité d'adsorption de l'azote, sa sélectivité azote/oxygène, sa résistance mécanique (le tassement de l'adsorbant devant être possible sur une certaine hauteur, sans écrasement) et la perte de charge occasionnée, et ceci naturellement dans le cas de mélanges gazeux comprenant à la fois de l'azote et de l'oxygène en vue d'une purification de l'oxygène.

On se reportera, par exemple, aux documents US-A-5,152,813 et US-A-5,258,058, ainsi qu'à la demande de brevet EP-A-0 297 542 lesquels décrivent l'utilisation de zéolites de type X échangées au lithium dans des procédés PSA destinés à la production d'oxygène.

L'enseignement de ces documents n'est cependant pas généralisable à la purification de mélanges gazeux contenant des impuretés du type du monoxyde de carbone, du dioxyde de carbone ou des hydrocarbures en $C_1$-$C_8$ dont la présence modifie le profil d'adsorption de l'azote par la zéolite. Or, ces impuretés sont les plus fréquemment rencontrées dans les unités PSA de purification de l'hydrogène.

D'autre part, les pressions d'adsorption mises en jeu dans l'art antérieur cité, étant généralement bien inférieures à $5.10^5$ Pa, ne correspondent pas à celles utilisées généralement pour les procédés PSA de production d'hydrogène.

Et de fait, concernant la production d'hydrogène à partir d'un mélange gazeux à base d'hydrogène contenant à titre d'impuretés CO, $CO_2$, $CH_4$, $NH_3$, $H_2S$, $N_2$ et $H_2O$, le document US-A-3,430,418 propose la combinaison de deux types d'adsorbant, le premier qui est un charbon actif assurant l'élimination de $CH_4$, $CO_2$ et $H_2O$, le second qui est une zéolite de type A au calcium permettant l'élimination de l'azote et du monoxyde de carbone. De façon à améliorer les performances des procédés PSA de production de l'hydrogène, et notamment, en vue d'obtenir un meilleur rendement en hydrogène, l'on a jusqu'à présent joué essentiellement sur le nombre et la disposition des lits d'adsorbants fonctionnant en parallèle. Les documents US-A-4,381,189 et FR-A-2,330,433 illustrent notamment une telle démarche.

La présente invention repose sur la découverte que l'association d'un type particulier de zéolite avec au moins un second adsorbant de type gel de silice, charbon actif ou charbon préfiltre permet l'élimination d'impuretés du type du monoxyde de carbone, du dioxyde de carbone, des hydrocarbures linéaires, ramifiés ou cycliques, saturés ou insaturés en $C_1$-$C_8$ ainsi que de l'azote, à partir d'un mélange gazeux d'hydrogène, tout en entraînant une augmentation significative de la productivité. Tel qu'il est utilisé ici, le terme productivité désigne le rapport du volume d'hydrogène produit, mesuré dans les conditions normales de température et de pression, par heure et par volume ou poids d'adsorbant.

Plus précisément, l'invention a trait à un procédé pour la séparation de l'hydrogène contenu dans un mélange gazeux pollué par du monoxyde de carbone et renfermant au moins une autre impureté choisie dans le groupe constitué du dioxyde de carbone et des hydrocarbures linéaires, ramifiés ou cycliques, saturés ou insaturés en $C_1$-$C_8$, comprenant la mise en contact dans une zone d'adsorption du mélange gazeux à purifier avec au moins:

- un premier adsorbant sélectif d'au moins le dioxyde de carbone et les hydrocarbures en $C_1$-$C_8$,
- et un second adsorbant qui est une zéolite du type faujasite échangée à au moins 80% au lithium et dont le rapport Si/Al est inférieur à 1,5, pour éliminer au moins le monoxyde de carbone (CO).

Le procédé de l'invention est plus particulièrement approprié à l'élimination du monoxyde de carbone à partir de mélanges gazeux à base d'hydrogène contenant, en outre, d'autres impuretés telles que du dioxyde de carbone ou des hydrocarbures linéaires, ramifiés ou cycliques, saturés ou insaturés en $C_1$-$C_8$, du type méthane, éthane, butane, propane, benzène, toluène ou xylène. De même, l'azote gazeux éventuellement présent dans le mélange gazeux, est séparé de l'hydrogène par adsorption sur le lit d'adsorbant particulier, mis en oeuvre dans le procédé de l'invention. Avantageusement, au moins une partie et, préférentiellement, la majeure partie de l'azote éventuellement présent dans le mélange gazeux à purifier est éliminée par adsorption sur un troisième lit d'adsorbant placé ou interposé, c'est-à-dire pris en "sandwich", entre le lit dudit premier adsorbant sélectif d'au moins le dioxyde de carbone et les hydrocarbures $C_1$-$C_8$, et le lit dudit second adsorbant destiné à éliminer principalement le CO. De préférence, on choisit l'adsorbant constituant le troisième lit parmi les zéolites, telle la zéolite 5A.

Selon un mode de réalisation préféré, le mélange gazeux contient du monoxyde de carbone, du dioxyde de carbone, du méthane, de l'azote et de l'hydrogène.

Comme mélanges gazeux pouvant convenir, on peut citer les mélanges gazeux issus d'unités de craquage catalytique, d'unités de craquage thermique, d'unités de reformage catalytique ou d'unités d'hydrotraitement.

La pureté de l'hydrogène issu du procédé de l'invention est d'au moins 99,999%, lorsque le mélange gazeux à purifier comprend plus de 45% d'hydrogène gazeux. Cette pureté peut atteindre cependant jusqu'à 99,999999 % ou plus, suivant les conditions opératoires mises en jeu et la quantité d'adsorbant utilisée. La purification d'un mélange gazeux contenant moins de 45% d'hydrogène gazeux n'est pas souhaitable, dans la mesure où il nécessiterait une quantité excessive d'adsorbant et une taille démesurée des installations de façon à pouvoir atteindre une pureté acceptable. Il va sans dire que plus la proportion d'hydrogène dans le mélange gazeux de départ est importante, plus l'hydrogène récupéré en sortie de la zone d'adsorption sera pur. On considère que le procédé de l'invention conduit aux meilleurs résultats lorsque le pourcentage d'hydrogène dans le mélange gazeux à traiter est d'au moins 70% .

En règle générale, dans le cadre de l'invention, la zone d'adsorption est maintenue à une pression comprise entre $5.10^5$ et $70.10^5$ Pa, lors de la mise en contact du mélange gazeux à purifier avec lesdits premier et second adsorbants. Cependant une pression supérieure ne nuit pas à la conduite de la purification. Toutefois, dans un souci d'économie d'énergie et en raison du coût élevé d'installations résistant à la pression, on évite généralement les pressions situées au-dessus de $70.10^5$ Pa. Des pressions inférieures à $5.10^5$ Pa ne sont habituellement pas mises en oeuvre pour la production d'hydrogène par adsorption des impuretés sur un lit d'adsorbant, et ceci pour des raisons d'efficacité. De préférence, la pression régnant dans la zone d'adsorption sera maintenue à une valeur inférieure à $50.10^5$ Pa, mieux encore inférieure à $30.10^5$ Pa. De même, la zone d'adsorption est maintenue, de préférence, au-dessus de $5.10^5$ Pa, préférentiellement, au-dessus de $15.10^5$ Pa.

La température du mélange gazeux entrant et de la zone d'adsorption n'est pas déterminante et est généralement maintenue constante pendant la phase d'adsorption des impuretés. D'ordinaire cette température est comprise entre 0 et 50°C, préférablement entre 30 et 45°C pendant l'adsorption.

Dans la zone d'adsorption, les premier et second adsorbants sont disposés de telle sorte que le mélange gazeux les traverse l'un après l'autre. On a constaté que l'efficacité de la séparation pouvait être optimisée en plaçant, à l'entrée de la zone d'adsorption, l'adsorbant sélectif au moins du dioxyde de carbone et des hydrocarbures en $C_1$-$C_8$ et, en sortie de la zone d'adsorption, l'adsorbant de type faujasite au lithium destiné à éliminer au moins le CO.

Ce résultat peut s'expliquer du fait que l'efficacité d'adsorption de la zéolite de type faujasite se trouve augmentée une fois les impuretés de type hydrocarbures en $C_1$-$C_8$ et dioxyde de carbone arrêtées par le premier adsorbant.

En tant qu'adsorbant sélectif au moins du dioxyde de carbone et des hydrocarbures en $C_1$-$C_8$, on peut utiliser un charbon actif, un charbon préfiltre, un gel de silice ou un mélange de ces différents adsorbants dans une proportion quelconque. Lorsque l'on choisit un tel mélange, il est préférable de disposer les différents constituants du mélange, dans la zone d'adsorption, sous forme de couches séparées de façon à ce que le mélange gazeux vienne tour à tour au contact de chaque couche.

Les gels de silice utilisables selon l'invention sont ceux couramment utilisés dans la technique. Ces gels sont disponibles dans le commerce notamment auprès de SOLVAY (gels sorbead). Les charbons préfiltres sont des charbons actifs de forte porosité et de faible densité. Les charbons actifs et charbons préfiltres sont par exemple commercialisés par NORIT, CARBOTECH, CECA, PICA ou CHEMVIRON.

Le second adsorbant est avantageusement une zéolite de type faujasite échangée à au moins 80% au lithium.

Les zéolites sont un groupe d'alumino-silicates métalliques naturels ou synthétiques hydratés dont la plupart présentent une structure cristalline. Les zéolites diffèrent les unes des autres de par leur composition chimique, leur structure cristalline et leurs propriétés physiques. De façon schématique, les cristaux de zéolite sont constitués de réseaux de tétrahèdres de $SiO_4$ et de $AlO_4$ imbriqués. Un certain nombre de cations, par exemple des cations de métaux alcalins et alcalinoterreux tels que le sodium, le potassium, le calcium et le magnésium, inclus dans le réseau cristallin assurent la neutralité électrique de la zéolite.

Les zéolites de type faujasite, également désignées dans la technique par zéolite X sont des zéolites cristallines de formule :

$$(0,9 \pm 0,2) \, M_{2/n} \, O : Al_2O_3 : 2,5 \pm 0,5 \, SiO_2 : yH_2O$$

dans laquelle M représente un métal alcalin ou alcalinoterreux, n est la valence du métal M, et y prend une valeur quelconque entre 0 et 8 suivant la nature de M et le degré d'hydratation de la zéolite. Le document US-A-2,882,244 a trait à ce type particulier de zéolite.

On sélectionne, selon l'invention, les zéolites X dont le rapport Si/Al est inférieur à 1,5. De manière préférée, ce rapport est compris entre 1 et 1,2 étant entendu qu'une valeur de 1 est plus particulièrement recommandée.

Les zéolites X sont disponibles dans le commerce notamment, auprès des sociétés suivantes : Bayer, UOP, CECA, Ueticon, Grace Davison ou Tosoh. Les zéolites 13X proposées par ces distributeurs sont, notamment, appropriées comme matériaux de départ pour la préparation des zéolites X échangées au lithium utilisables selon l'invention en tant qu'adsorbant.

Cela étant, le procédé de l'invention n'est pas limité à l'utilisation de faujasites commercialisées. L'emploi d'une zéolite de porosité plus ou moins élevée que celle des zéolites X industrielles actuellement disponibles dans le commerce n'est par exemple pas exclu.

Selon l'invention, les zéolites peuvent être sous la forme de poudres cristallines ou d'agglomérats. Les agglomérats de zéolites sont obtenus de façon conventionnelle par mise en oeuvre de procédés classiques d'agglomération. La zéolite agglomérée peut, par exemple, être préparée par mélange d'une poudre cristalline de zéolite avec de l'eau et un liant (généralement sous forme de poudre), puis pulvérisation de ce mélange sur des agglomérats de zéolites jouant le rôle de germe d'agglomération. Pendant la pulvérisation les agglomérats de zéolite sont soumis à une rotation continue sur eux-mêmes. Ceci peut être réalisé en disposant les agglomérats dans un réacteur en rotation sur lui-même autour d'un axe de rotation, ledit axe de rotation étant préférablement incliné par rapport à la direction verticale. Par ce procédé, couramment désigné dans la technique par procédé "boule de neige" on obtient des agglomérats sous forme de billes. Les agglomérats ainsi obtenus sont ensuite soumis à une cuisson à une température comprise entre environ 500 et 700°C, de préférence à une température voisine de 600°C. Comme exemple de liant, l'homme du métier pourra recourir à une argile telle que du kaolin, de la silice ou de l'alumine. La zéolite agglomérée ainsi obtenue, laquelle comprend un liant, peut servir à la préparation de zéolite agglomérée sans liant également utilisable dans le procédé de l'invention. De façon à convertir le liant en phase zéolitique, on peut procéder en effet à la cuisson ultérieure des agglomérats zéolitiques avec liant, ce par quoi, après cristallisation, on obtient des agglomérats zéolitiques sans liant.

Selon l'invention, les zéolites X utilisables en tant qu'adsorbant sont soumises à un traitement ultérieur visant à introduire des cations lithium au sein du réseau cristallin. Ceci est réalisé par échange d'ions, une partie des cations $M^+$ initialement contenus dans la zéolite étant échangée par des cations lithium.

La combinaison des premier et second adsorbants décrits ci-dessus conduit à une amélioration de la purification du mélange gazeux d'hydrogène et de la productivité globale, lorsque le second adsorbant est une zéolite de type faujasite X échangée à au moins 80% au lithium.

On entend par zéolite échangée à au moins 80% au lithium, une zéolite dont au moins 80% des motifs $AlO_2^-$ sont associés à des cations lithium.

Tout procédé connu de l'état de la technique permettant d'aboutir à une zéolite de type faujasite échangée à au moins 80% au lithium peut être mis en oeuvre.

Les zéolites de type faujasite échangées à plus de 90% au lithium sont plus particulièrement préférées.

Avant utilisation des zéolites au lithium, une activation de celles-ci est nécessaire. Selon l'invention, on entend par activation d'une zéolite sa déshydratation, c'est-à-dire l'élimination de l'eau d'hydratation contenue dans la zéolite. En règle générale, on fait en sorte que la pression partielle de l'eau dans le gaz au contact de la zéolite soit inférieure à environ $4.10^4$ Pa, de préférence $1.10^4$ Pa après activation. Les procédés d'activation des zéolites sont connus dans la technique. L'une de ces méthodes consiste à soumettre la zéolite à une pression d'environ $1.10^4$ Pa à $1.10^6$ Pa tout en faisant passer un courant d'un gaz inerte au travers du lit d'adsorbant constitué de ladite zéolite et tout en chauffant ladite zéolite jusqu'à une température comprise entre 300 et 650°C à une vitesse de montée en température d'environ 0,1 à 40°C par minute. En variante, on peut activer la zéolite en la maintenant sous un vide d'environ $1.10^4$ Pa ou inférieur tout en chauffant la zéolite jusqu'à une température d'environ 300 à 650°C sans nul besoin de recourir au balayage par un gaz inerte. Une autre alternative consiste à activer la zéolite par un procédé utilisant des micro-ondes, tel que décrit dans le document US-A-4,322,394.

Pour la mise en oeuvre du lit d'adsorbant, on peut a priori combiner les premier et second adsorbants dans un rapport pondéral quelconque. Néanmoins, on a pu constaté qu'un rapport pondéral du premier adsorbant sélectif au moins du dioxyde de carbone et des hydrocarbures en $C_1$-$C_8$ au second adsorbant de type zéolite compris entre 10/90 et 85/15 est particulièrement avantageux du point de vue de l'efficacité de la purification et de la productivité globale. De façon empirique, on a pu observer que ce rapport est idéalement compris entre 50/50 et 80/20, de préférence entre 60/40 et 80/20.

De façon à produire de l'hydrogène en continu, il est connu de disposer en parallèle un certain nombre de lits d'adsorbant que l'on soumet en alternance à un cycle d'adsorption avec compression adiabatique et de désorption avec décompression.

De telles installations sont notamment mises en oeuvre dans les procédés PSA d'adsorption par variation de la pression. Le cycle de traitement auquel est soumis chaque lit d'adsorbant comprend les étapes consistant à :

a) faire passer un mélange gazeux à base d'hydrogène pollué par du monoxyde de carbone et renfermant au moins une autre impureté choisie dans le groupe constitué du dioxyde de carbone et des hydrocarbures en $C_1$-$C_8$ dans une zone d'adsorption comprenant, au moins:

- un premier lit d'adsorbant constitué d'un premier adsorbant sélectif au moins du dioxyde de carbone et des hydrocarbures en $C_1$-$C_8$ et:
- un second lit d'adsorbant constitué d'un second adsorbant qui est une zéolite de type faujasite échangée à au moins 80% au lithium dont le rapport Si/Al est inférieur à 1,5 pour éliminer au moins le CO;

b) désorber le monoxyde de carbone et l'autre ou les autres impuretés adsorbées sur lesdits premier et second adsorbants par instauration d'un gradient de pression et abaissement progressif de la pression dans ladite zone d'adsorption de façon à récupérer le monoxyde de carbone et l'autre ou les autres impuretés par l'entrée de ladite zone d'adsorption; et

c) remonter en pression ladite zone d'adsorption par introduction d'un courant d'hydrogène pur par la sortie de la zone d'adsorption.

Ainsi, chaque lit d'adsorbant est soumis à un cycle de traitement comprenant une première phase de production d'hydrogène, une seconde phase de décompression et une troisième phase de recompression.

Il est clair qu'en ajustant les conditions opératoires de l'étape a) conformément aux modes de réalisation préférés décrits ci-dessus, on aboutit à une amélioration des rendement et productivité ainsi qu'à une amélioration de la pureté de l'hydrogène récupéré en sortie. Ainsi, on optera, de préférence, pour la purification d'un mélange gazeux contenant plus de 70% d'hydrogène et comprenant à titre d'impuretés de l'azote, du méthane, du CO et du $CO_2$, que l'on mettra en contact avec un lit d'adsorbant constitué de charbon actif et de faujasite échangée à plus de 90% au lithium, le rapport pondéral du charbon actif à la faujasite étant préférablement compris entre 50/50 et 80/20.

De manière préférée, la zone d'adsorption est maintenue à une température comprise entre 0 et 80°C.

La capacité des lits d'adsorbant est limitée par la dimension maximale qui peut être utilisée soit à cause de la résistance mécanique des particules individuelles d'adsorbant, soit à cause de la dimension maximale qu'on peut utiliser pour l'expédition des récipients contenant les adsorbants. C'est pourquoi, le fonctionnement de 4 à 10 lits d'adsorbants disposés en parallèle est chose courante dans la technique.

De façon à optimiser les procédés PSA, les phases de décompression et de compression des différents lits d'adsorbant sont synchronisées : il est notamment avantageux d'introduire des étapes d'égalisation de pression entre deux lits d'adsorbant, l'un de ces deux lits étant en phase de décompression, l'autre en phase de recompression.

L'invention est décrite maintenant en référence aux exemples de réalisation 1 et 2 et aux figures annexées.

La figure 1 représente, de façon schématique, une installation pour la mise en oeuvre d'un procédé PSA de production d'hydrogène, comprenant dix lits d'adsorbant 1 à 10.

La figure 2 représente l'évolution de la pression au sein d'une zone d'adsorption au cours d'un cycle de traitement de purification d'un mélange gazeux à base d'hydrogène par un procédé PSA.

La figure 3 représente les variations de la capacité d'adsorption de diverses zéolites en fonction de la pression d'adsorption.

La figure 4 représente des variations de la capacité d'adsorption d'une zéolite de type X échangée au lithium selon l'invention (courbe LiX) et d'une zéolite 5A classique (courbe 5A) en fonction de la pression d'adsorption.

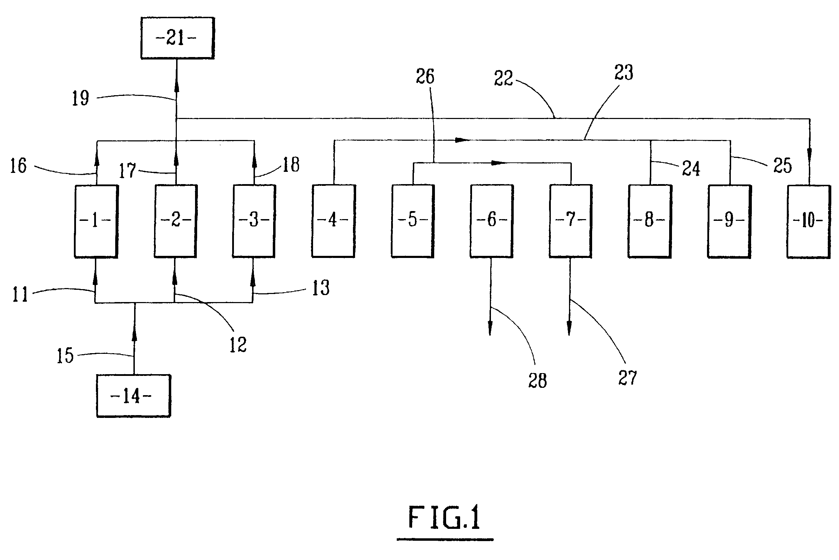

Sur la figure 1, seules les conduites par lesquelles circule l'hydrogène, à un instant donné, ont été représentées. Plus précisément, à l'instant considéré les lits 1 à 3 sont en phase de production, les lits 4 à 7 sont en phase de décompression et les lits 8 à 10 sont en phase de recompression.

Les lits 1 à 3 sont respectivement alimentés en mélange gazeux à purifier via les conduites 11, 12 et 13. Les conduites 11, 12 et 13 sont chacune reliées à une source de mélange gazeux 14 par l'intermédiaire d'une seule et même conduite 15 dans laquelle débouchent les conduites 11, 12 et 13. En sortie des zones d'adsorption 1 à 3, l'hydrogène purifié est récupéré via les conduites 16, 17 et 18.

Les conduites 16 à 18 débouchent toutes trois dans une conduite 19 qui amène l'hydrogène purifié, issu des conduites 16, 17 et 18, vers une enceinte de stockage 21 via la conduite 19. Une partie de l'hydrogène produit est prélevée sur la conduite 19 via la conduite 22 et amenée jusqu'au lit d'adsorbant 10 lequel est alors en fin de phase de recompression : on procède ainsi à une égalisation de pression entre les lits d'adsorbant 1 à 3 en phase de production et le lit d'adsorbant 10 lequel est en fin de cycle de traitement.

Pendant ce même temps, on opère à une égalisation de pression des lits d'adsorbant 4 et 8 d'une part et 4 et 9 d'autre part. Pour ce faire, les entrées respectives des zones d'adsorption 4, 8 et 9 sont hermétiquement fermées. Les lits d'adsorbants 4 et 8 sont mis en communication l'un avec l'autre via une conduite 23. Le lit d'adsorbant 4 entrant en phase de décompression est encore sous une pression d'hydrogène relativement élevée, alors que le lit d'adsorbant 8 qui est en début de phase de recompression est à une pression bien inférieure. Suite à la différence de pression existant entre les lits d'adsorbant 4 et 8, l'hydrogène est entraîné du lit d'adsorbant 4 vers le lit d'adsorbant 8, ce qui contribue à la recompression du lit d'adsorbant 8 et à la décompression concomitante du lit d'adsorbant 4. La conduite 23 débouche plus précisément dans des conduites 24 et 25, la conduite 24 étant reliée au lit d'adsorbant 8 et la conduite 25 étant reliée au lit d'adsorbant 9. Ainsi, par l'intermédiaire des conduites 23 et 25 les lits d'adsorbant 4 et 9 sont également mis en communication l'un avec l'autre : on procède de fait simultanément à une égalisation de pression des lits d'adsorbant 4 et 8 d'une part et 4 et 9 d'autre part.

De la même manière, on opère une égalisation de pression entre les lits d'adsorbant 5 et 7, ces deux lits étant mis en communication l'un avec l'autre par l'intermédiaire d'une conduite 26. Là encore, dans la mesure où la pression régnant au sein du lit d'adsorbant 5 est supérieure à la pression régnant au sein de la zone d'adsorption 7, l'hydrogène s'écoule du lit d'adsorbant 5 vers le lit d'adsorbant 7. On aboutit ainsi à une égalisation de pression. Néanmoins, dans la mesure où les lits d'adsorbants 5 et 7 sont l'un en cours de décompression et l'autre en fin de phase de décompression, on souhaite, non pas égaliser les pressions de ces zones d'adsorption mais au contraire abaisser la pression régnant dans la zone d'adsorption 7 par rapport à la pression régnant dans la zone d'adsorption 5. Ceci est réalisé en laissant s'évacuer l'excès d'hydrogène de la zone d'adsorption 7 via l'entrée 27 de la zone d'adsorption 7.

Le lit d'adsorption 6 est également en phase de décompression. Sa pression est abaissée simplement par évacuation de l'hydrogène via l'entrée 28 de la zone d'adsorption 6. C'est à ce stade de décompression qu'a lieu la désorption des impuretés adsorbées sur le lit d'adsorbant.

Exemples

Dans les exemples qui suivent on réalise la purification de deux mélanges gazeux M1 et M2 dont les compositions sont indiquées dans le tableau 1 ci-dessous.

Dans ce tableau, les pourcentages sont des pourcentages volumiques.

TABLEAU 1

|  | $CH_4$ (%) | CO(%) | $CO_2$(%) | $N_2$ (%) | $H_2$(%) |
|---|---|---|---|---|---|
| M1 | 3 | 3 | 22 | 2 | 70 |
| M2 | 3 | 3 | 22 | 0 | 72 |

Pour ce faire, on utilise une installation analogue à celle décrite en référence à la figure 1, comprenant 10 lits d'adsorbant.

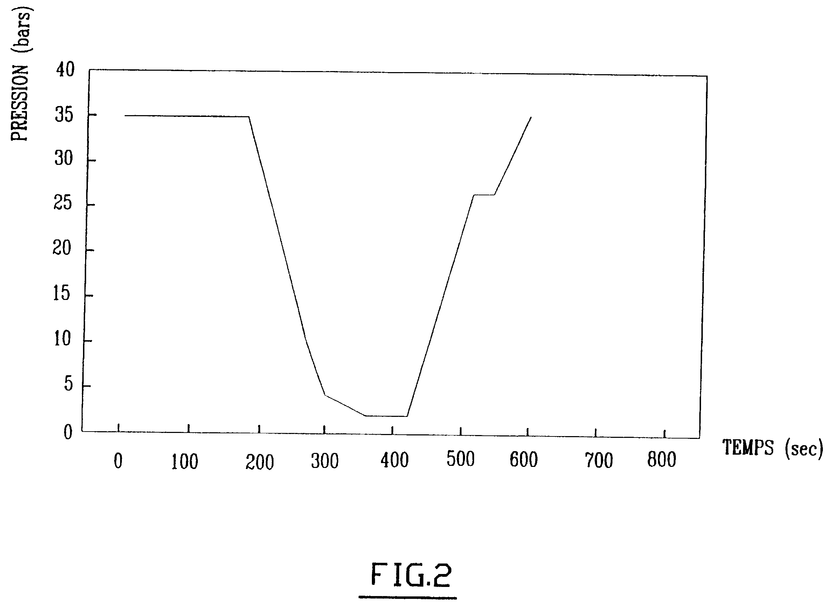

Le cycle de traitement mis en oeuvre est schématisé figure 2. Plus précisément, on a représenté sur la figure 2, l'évolution de la pression au sein d'un lit d'adsorbant au cours du temps.

Dans tous les cas, les lits d'adsorbant sont garnis de charbon actif d'une part et d'une zéolite d'autre part.

Le charbon actif utilisé est du type de ceux généralement mis en oeuvre dans les différents procédés de séparation de l'hydrogène par adsorption par variation de la pression (PSA/$H_2$).

Dans le cas des exemples comparatifs 1, 3 et 4, la zéolite est la zéolite 5A vendue par la société Procatalyse sous la référence 5APS.

Dans le cas de l'exemple comparatif 2, la zéolite est la zéolite 5A vendue par la société Bayer sous la référence Baylith K.

Dans le cas des exemples 1 à 3 conformes à l'invention, la zéolite utilisée est une zéolite X échangée à 90% au lithium.

Les zéolites Baylith K [R] (Bayer) et 5APS [R] (Procatalyse) sont des zéolites A contenant en tant que cations échangeables des ions $Na^+$ et $Ca^{2+}$, et, présentant des pores d'une taille d'environ 5A.

La zéolite 5APS [R] qui se présente sous la forme de produits d'extrusion d'un diamètre de 1,6 mm et 3,2 mm est en outre caractérisée par :

- une perte au feu comprise entre 1 et 1,5%, à 550°C;
- une masse volumique apparente comprise entre 0,69 et 0,73 g/$cm^3$;
- une chaleur spécifique de 0,23 kcal.$kg^{-1}$.°$C^{-1}$;
- une chaleur d'adsorption de l'eau d'au plus 1000 kcal/kg;
- une adsorption statique de l'eau comprise entre 17,0 et 19 g d'eau pour 100 g d'adsorbant à une humidité relative de 10%; et
- une adsorption statique de l'eau comprise entre 20 et 22 g d'eau pour 100 g d'adsorbant à une humidité relative de 60%.

La zéolite X échangée à 90% au lithium est préparée de la façon suivante au départ d'une faujasite 13X présentant un rapport Si/Al de 1,25 et contenant environ 20% de liant :

Au travers d'une colonne garnie de 1 kg de cette faujasite, on fait percoler une solution aqueuse 1,94 N de chlorure de lithium contenant 60 mmol/l de chlorure de sodium, dont on a préalablement ajusté le pH à 8, par addition de lithine. Lors de cette opération, la colonne est maintenue à une température de 95°C.

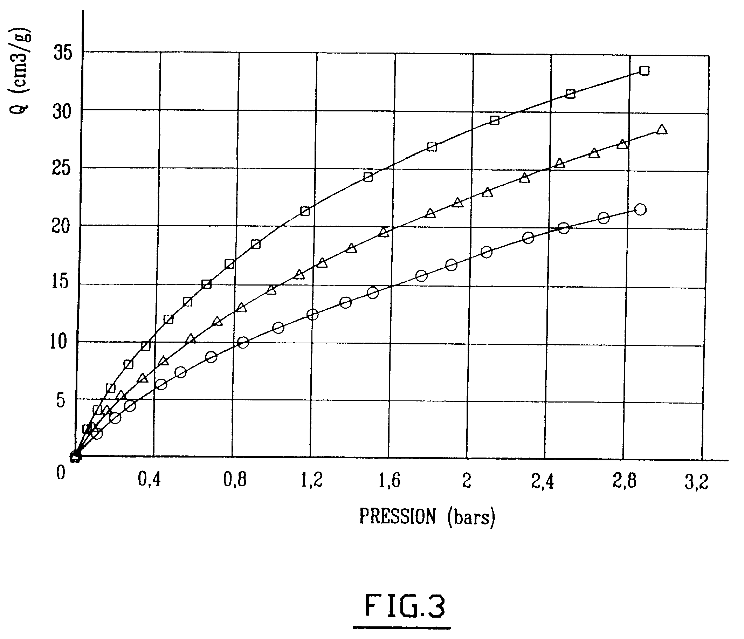

La zéolite échangée au lithium obtenue est caractérisée par la courbe isotherme passant par les points marqués □ de la Figure 3. Cette courbe isotherme a été tracée à 20°C par analyse volumétrique au moyen d'un appareil Sorptomatic MS 190 de chez FISONS après activation sous vide de la zéolite à 400°C pendant 8 heures.

Plus précisément, cette courbe représente les variations de la capacité d'adsorption de l'azote exprimée en $cm^3$ par gramme en fonction de la pression d'adsorption (exprimée en bars).

Avant leur mise en place dans les différentes zones d'adsorption les zéolites sont activées sous vide à 400°C pendant 8 heures.

On dispose le charbon actif en entrée de la zone d'adsorption, la zéolite de type faujasite échangée au lithium étant disposée en sortie de ladite zone d'adsorption de telle sorte que ces deux adsorbants forment deux couches superposées distinctes.

La température des lits d'adsorbant est maintenue à 40°C.

Plusieurs expériences sont alors réalisées pour tester l'efficacité du procédé de l'invention; dans ces expériences on modifie les valeurs des pressions d'adsorption (atteinte en fin de phase de compression) et de désorption (atteinte en fin de phase de décompression) et on détermine les rendement et productivité résultants.

La productivité P est définie ici comme le rapport du volume d'hydrogène produit, mesuré dans les conditions normales de température et de pression, par heure et par $m^3$ d'adsorbant.

Le rendement R du procédé correspond au rapport du volume d'hydrogène pur produit, mesuré dans les conditions normales de température et de pression, au volume d'hydrogène contenu dans le gaz effluent à purifier, également mesuré dans les conditions normales de température et de pression.

Dans les exemples ci-dessous les rendements et productivités rapportés dans les tableaux 2 et 3 sont des rendements et productivités relatifs.

De fait, l'exemple comparatif 1 a été choisi comme référence, c'est-à-dire que pour cet exemple les rendement et productivité relatifs ont été fixés à 100: cet exemple illustre plus précisément la purification du mélange M1 décrit au tableau 1 en présence d'un adsorbant constitué de 70% en poids de charbon actif et de 30% en poids de zéolite 5APS, la pression de désorption étant fixée à $2.10^5$ Pa et la pression d'adsorption étant de $20.10^5$ Pa.

Par conséquent, dans le cas de tous les autres exemples, les rendements et productivités relatifs $R_r$ et $P_r$ sont respectivement donnés par les équations :

$$R_r = \frac{R \times 100}{Rc_1} \quad et \quad P_r = \frac{P \times 100}{Pc_1}$$

où R et P sont tels que définis ci-dessus et $Rc_1$ et $Pc_1$ sont respectivement les rendement et productivité réels déterminés dans le cas de l'exemple comparatif 1.

Les résultats obtenus dans le cas des exemples comparatifs ont été rapportés dans le tableau 2 ci-dessous en fonction des conditions de pression sélectionnées, et des rapports massiques charbon actif/zéolite utilisés :

TABLEAU 2

| Ex. comparatif | Zéolite | Rapport massique charbon actif/zéolite | Mélange gazeux à purifier | Pression d'adsorption (bars) | Pression de désorption (bars) | Rendement relatif | Productivité relative |
|---|---|---|---|---|---|---|---|
| 1 | 5APS | 70/30 | M1 | 20 | 2 | 100 | 100 |
| 2 | Baylith K | 70/30 | M1 | 20 | 2 | 96,1 | 98 |
| 3 | 5APS | 75/25 | M2 | 23 | 1,6 | 100 | 100 |
| 4 | 5APS | 75/25 | M2 | 33 | 1,6 | 100 | 100 |

Les résultats obtenus en utilisant la zéolite échangée au lithium conformément au procédé de l'invention ont été recueillis dans le tableau 3 dans le cas des trois exemples suivants :

TABLEAU 3

| Ex. | Rapport massique charbon actif/zéolite au Li | Mélange gazeux à purifier | Pression d'adsorption (bars) | Pression de désorption (bars) | Rendement relatif | Productivité relative |
|---|---|---|---|---|---|---|
| 1 | 70/30 | M1 | 20 | 2 | 103,5 | 113,4 |
| 2 | 75/25 | M2 | 23 | 1,6 | 101,7 | 112,3 |
| 3 | 75/25 | M2 | 33 | 1,6 | 101,6 | 111,3 |

Dans le cas des exemples 1 à 3 la pureté de l'hydrogène produit était de 99,999%.

Il résulte clairement de ces résultats que la combinaison de charbon actif et de zéolite X échangée au lithium conduit à de meilleures valeurs du rendement et de la productivité.

Sur la figure 3 annexée, sont représentées les courbes isothermes de variation de la capacité d'adsorption de l'azote dans le cas de chacune des zéolites étudiées dans les exemples 1 à 3 et les exemples comparatifs 1 à 4, en fonction de la pression d'adsorption.

Sur ces courbes, on a porté la quantité Q d'azote adsorbée (exprimée en $cm^3$ par gramme) en ordonnées et la pression d'adsorption (exprimée en bars) en abscisses. Les points concernant la zéolite échangée au lithium des exemples 1 à 3 sont marqués □ ; les points concernant la zéolite A Baylith K [R] (Bayer) sont marqués 0 et les points concernant la zéolite A 5APS[R] (Procatalyse) sont marqués △.

Ces courbes ont été tracées à 20°C par analyse volumétrique au moyen d'un appareil Sorptomatic MS 190 de chez FISONS après activation sous vide des zéolites à 400°C pendant 8 heures.

Il résulte clairement de ces courbes que la capacité d'adsorption de la zéolite au lithium est supérieure. De même, la capacité d'adsorption de la zéolite Baylith K commercialisée par Bayer est plus importante que celle de la zéolite 5 APS.

Or, à la lumière des résultats obtenus précédemment, les rendement et productivité obtenus dans les procédés PSA de production de l'hydrogène sont les meilleurs pour la zéolite X échangée au lithium et les moins bons dans le cas de la zéolite A Baylith K commercialisée par Bayer.

On démontre ainsi que la capacité d'adsorption d'une zéolite pour l'azote, jusqu'à présent considérée comme un critère important pour le choix de la zéolite la plus efficace, est sans relation directe avec les rendement et productivité finalement obtenus dans les procédés PSA de production de l'hydrogène.

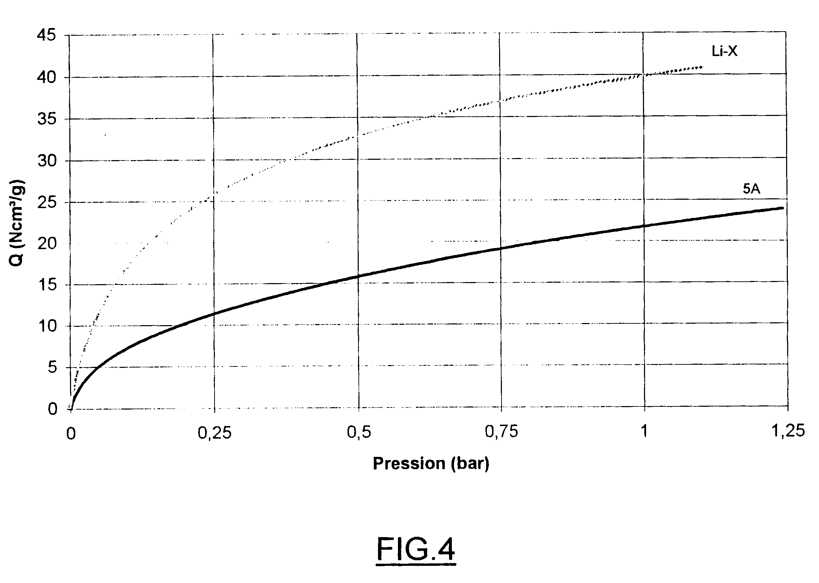

Sur la figure 4, sont représentées les courbes isothermes de variation de la capacité d'adsorption du monoxyde de carbone (CO) d'une zéolite de type faujasite échangée à 87% au lithium selon l'invention (courbe LiX) et d'une zéolite 5A (courbe 5A).

Sur ces courbes, on a porté la quantité Q de monoxyde de carbone (CO) adsorbée (exprimée en $Ncm^3/g$) en ordonnées et la pression d'adsorption (exprimée en bars) en abscisses; ces mesures ont été réalisées à 30°C.

Ces courbes isothermes montrent clairement que la zéolite X échangée au lithium (LiX) a, pour une pression donnée, une capacité d'adsorption pour le monoxyde de carbone beaucoup plus élevée que la zéolite classique de type 5A.

De même, on constate que la respiration en CO d'une zéolite X échangée au lithium selon l'invention est nettement supérieure à celle d'une zéolite de type 5A classique. En effet, la respiration d'une zéolite est définie comme la différence entre la capacité d'adsorption d'un gaz pur par cette zéolite à la pression partielle haute, ou pression d'adsorption et la capacité d'adsorption dudit gaz à la pression basse, ou pression de désorption, par ladite zéolite.

D'où, pour une pression d'adsorption de 23 bar, une pression de désorption de 1,6 bar et un gaz ayant une teneur en CO de 3% environ, on obtient une pression partielle moyenne de CO en phase d'adsorption (sur zéolite) d'environ 0,69 bar et on a évalué une pression d'environ 0,24 bar en phase de désorption.

De là, pour une zéolite classique de type 5A, la quantité de CO adsorbée en phase d'adsorption est d'environ 18,3 $Ncm^3/g$ et d'environ 11,1 $Ncm^3/g$ en phase de désorption, ce qui correspond à une respiration d'environ 7,2 $Ncm^3/g$.

De manière analogue, pour une zéolite X échangée au lithium conforme à l'invention, la quantité de CO adsorbée en phase d'adsorption est d'environ 35,9 $Ncm^3/g$ et d'environ 25,2 $Ncm^3/g$ en phase de désorption, ce qui correspond à une respiration d'environ 10,7 $Ncm^3/g$.

Il apparaît donc immédiatement qu'utiliser une zéolite échangée au lithium à la place d'une zéolite classique de type 5A permet d'obtenir, de manière surprenante, une respiration pour le monoxyde de carbone (CO) améliorée d'environ 48%.

On démontre ainsi, de façon convaincante, l'intérêt industriel et commercial du procédé de la présente invention.

## Revendications

1. Procédé pour la séparation de l'hydrogène contenu dans un mélange gazeux pollué par du monoxyde de carbone et renfermant au moins une autre impureté choisie dans le groupe constitué du dioxyde de carbone et des hydrocarbures linéaires, ramifiés ou cycliques, saturés ou insaturés en $C_1$-$C_8$, comprenant la mise en contact dans une zone d'adsorption du mélange gazeux à purifier avec, au moins:

   - un premier adsorbant sélectif au moins du dioxyde de carbone et des hydrocarbures en $C_1$-$C_8$ et,
   - un second adsorbant qui est une zéolite de type faujasite échangée à au moins 80% au lithium dont le rapport Si/Al est inférieur à 1,5.

2. Procédé selon la revendication 1, caractérisé en ce que le mélange gazeux à purifier contient plus de 45% d'hydrogène gazeux et, de préférence, plus de 70%.

3. Procédé selon l'une quelconque des revendications 1 à 2, caractérisé en ce que le mélange gazeux comprend, en outre, de l'azote à titre d'impureté.

4. Procédé selon l'une quelconque des revendications 1 à 3, caractérisé en ce que le mélange gazeux est un mélange comportant de l'hydrogène, du monoxyde de carbone, du dioxyde de carbone, du méthane et de l'azote.

5. Procédé selon l'une quelconque des revendications 1 à 4, caractérisé en ce que la zone d'adsorption est maintenue sous une pression comprise entre $5.10^5$ et $70.10^5$ Pa, de préférence entre $15.10^5$ et $30.10^5$ Pa.

6. Procédé selon l'une quelconque des revendications 1 à 5, caractérisé en ce que le mélange gazeux à purifier est, tout d'abord, mis en contact avec le premier adsorbant sélectif du dioxyde de carbone et des hydrocarbures en $C_1$-$C_8$, puis dans un deuxième temps avec le second adsorbant de type faujasite au lithium.

7. Procédé selon l'une quelconque des revendications 1 à 6, caractérisé en ce que le premier adsorbant sélectif du dioxyde de carbone et des hydrocarbures en $C_1$-$C_8$ est un charbon actif, un charbon préfiltre, un gel de silice ou un mélange de ceux-ci, de préférence un charbon actif.

8. Procédé selon l'une quelconque des revendications 1 à 7, caractérisé en ce que le second adsorbant est une zéolite de type faujasite échangée à au moins 90% au lithium.

9. Procédé selon l'une quelconque des revendications 1 à 8, caractérisé en ce que le second adsorbant est une zéolite de type faujasite dont le rapport Si/Al est compris entre 1 et 1,2, et est, de préférence, égal à 1.

10. Procédé selon l'une des revendications 1 à 9, caractérisé en ce qu'au moins une partie de l'azote est adsorbé sur au moins un lit d'un troisième adsorbant placé entre les lits de premier et second adsorbants.

11. Procédé selon la revendication 10, caractérisé en ce que ledit troisième adsorbant est une zéolite, de préférence une zéolite de type 5A.

12. Procédé selon l'une quelconque des revendications 1 à 11, caractérisé en ce que le rapport pondéral du premier adsorbant sélectif d'au moins le dioxyde de carbone et les hydrocarbures en $C_1$-$C_8$ au second adsorbant de type faujasite est compris entre 10/90 et 85/15, de préférence entre 50/50 et 80/20.

13. Procédé selon l'une quelconque des revendications précédentes, caractérisé en ce qu'il comprend la mise en oeuvre d'un cycle de traitement comprenant les étapes consistant à :

   a) faire passer un mélange gazeux à base d'hydrogène pollué par au moins du monoxyde de carbone et renfermant au moins une autre impureté choisie dans le groupe constitué du dioxyde de carbone et des hydrocarbures en $C_1$-$C_8$ dans une zone d'adsorption comprenant, au moins:

   -  un premier lit d'adsorbant constitué d'un premier adsorbant sélectif d'au moins le dioxyde de carbone et les hydrocarbures en $C_1$-$C_8$ et,
   -  un second lit d'adsorbant constitué d'un second adsorbant qui est une zéolite de type faujasite échangée à au moins 80% au lithium dont le rapport Si/Al est inférieur à 1,5;

   b) désorber le monoxyde de carbone et l'autre ou les autres impuretés adsorbées sur lesdits au moins premier et second adsorbants par instauration d'un gradient de pression et abaissement progressif de la pression dans ladite zone d'adsorption de façon à récupérer le monoxyde de carbone et l'autre ou les autres impuretés par l'entrée de ladite zone d'adsorption; et
   c) remonter en pression ladite zone d'adsorption par introduction d'un courant d'hydrogène pur par la sortie de la zone d'adsorption.

14. Procédé selon la revendication 13, caractérisé en ce qu'à l'étape a) la zone d'adsorption est maintenue sous une pression comprise entre $5.10^5$ et $70.10^5$ Pa, de préférence entre $15.10^5$ et $30.10^5$ Pa, et à une température comprise entre 0 et 80°C.

**Claims**

1. Process for the separation of hydrogen contained in a gas mixture contaminated by carbon monoxide and containing at least one other impurity chosen from the group consisting of carbon dioxide and saturated or unsaturated, linear, branched or cyclic $C_1$-$C_8$ hydrocarbons, which comprises bringing the gas mixture to be purified into contact, in an adsorption region, with at least:

   -  one first adsorbent selective at least for carbon dioxide and for $C_1$-$C_8$ hydrocarbons and,
   -  one second adsorbent which is a zeolite of faujasite type exchanged to at least 80% with lithium, the Si/Al ratio of which is less than 1.5.

2. Process according to Claim 1, characterized in that the gas mixture to be purified contains more than 45% of gaseous hydrogen and, preferably, more than 70%.

3. Process according to either one of Claims 1 and 2, characterized in the gas mixture additionally comprises nitrogen as impurity.

4. Process according to any one of Claims 1 to 3, characterized in that the gas mixture is a mixture containing hydrogen, carbon monoxide, carbon dioxide, methane and nitrogen.

5. Process according to any one of Claims 1 to 4, characterized in that the adsorption region is maintained under a pressure of between $5 \times 10^5$ and $70 \times 10^5$ Pa, preferably between $15 \times 10^5$ and $30 \times 10^5$ Pa.

6. Process according to any one of Claims 1 to 5, characterized in that the gas mixture to be purified is first of all brought into contact with the first adsorbent selective for carbon dioxide and for $C_1$-$C_8$ hydrocarbons and then, in a second step, with the second adsorbent of faujasite type containing lithium.

7. Process according to any one of Claims 1 to 6, characterized in that the first adsorbent selective for carbon dioxide and for $C_1$-$C_8$ hydrocarbons is an active charcoal, a prefilter charcoal, a silica gel or a mixture of these, preferably an active charcoal.

8. Process according to any one of Claims 1 to 7, characterized in that the second adsorbent is a zeolite of faujasite type exchanged to at least 90% with lithium.

9. Process according to any one of Claims 1 to 8, characterized in that the second adsorbent is a zeolite of faujasite type, the Si/Al ratio of which is between 1 and 1.2 and is preferably equal to 1.

10. Process according to one of Claims 1 to 9, characterized in that at least a portion of the nitrogen is adsorbed on at least one bed of a third adsorbent placed between the beds of first and second adsorbents.

11. Process according to Claim 10, characterized in that the said third adsorbent is a zeolite, preferably a zeolite of type 5A.

12. Process according to any one of Claims 1 to 11, characterized in that the ratio by weight of the first adsorbent selective for at least carbon dioxide and $C_1$-$C_8$ hydrocarbons to the second adsorbent of faujasite type is between 10/90 and 85/15, preferably between 50/50 and 80/20.

13. Process according to any one of the preceding claims, characterized in that it comprises carrying out a treatment cycle comprising the stages consisting in:

a) passing a hydrogen-based gas mixture contaminated by at least carbon monoxide and containing at least one other impurity chosen from the group consisting of carbon monoxide and $C_1$-$C_8$ hydrocarbons into an adsorption region comprising at least:

- one first adsorbent bed composed of a first adsorbent selective for at least carbon dioxide and $C_1$-$C_8$ hydrocarbons and,
- one second adsorbent bed composed of a second adsorbent which is a zeolite of faujasite type exchanged to at least 80% with lithium, the Si/Al ratio of which is less than 1.5;

b) desorbing the carbon monoxide and the other impurity or impurities adsorbed on the said at least first and second adsorbents by setting up a pressure gradient and progressively lowering the pressure in the said adsorption region, so as to recover the carbon monoxide and the other impurity or impurities via the inlet of the said adsorption region; and
c) raising the pressure in the said adsorption region by introduction of a stream of pure hydrogen via the outlet of the adsorption region.

14. Process according to Claim 13, characterized in that, in stage a), the adsorption region is maintained under a pressure of between $5 \times 10^5$ and $70 \times 10^5$ Pa, preferably between $15 \times 10^5$ and $30 \times 10^5$ Pa, and at a temperature of between 0 and 80°C.

**Patentansprüche**

1. Verfahren zur Abtrennung von in einem mit Kohlenmonoxid verunreinigten und mindestens eine weitere Verunreinigung aus der Gruppe bestehend aus Kohlendioxid und linearen, verzweigten oder cyclischen, gesättigten oder ungesättigten $C_1$-$C_8$-Kohlenwasserstoffen enthaltenden Gasgemisch enthaltenem Wasserstoff, bei dem man das zu reinigende Gasgemisch in einer Adsorptionszone mit mindestens:

- einem ersten, für mindestens Kohlendioxid und $C_1$-$C_8$-Kohlenwasserstoffe selektiven Adsorptionsmittel und
- einem zweiten Adsorptionsmittel, bei dem es sich um einen zu mindestens 80% mit Lithium ausgetauschten Zeolithen vom Faujasittyp mit einem Si/Al-Verhältnis unter 1,5 handelt,
  in Berührung bringt.

2. Verfahren nach Anspruch 1, dadurch gekennzeichnet, daß das zu reinigende Gasgemisch mehr als 45% und vorzugweise mehr als 70% Wasserstoffgas enthält.

3. Verfahren nach Anspruch 1 oder 2, dadurch gekennzeichnet, daß das Gasgemisch außerdem auch noch Stickstoff als Verunreinigung enthält.

4. Verfahren nach einem der Ansprüche 1 bis 3, dadurch gekennzeichnet, daß es sich bei dem Gasgemisch um ein Wasserstoff, Kohlenmonoxid, Kohlendioxid, Methan und Stickstoff enthaltendes Gemisch handelt.

5. Verfahren nach einem der Ansprüche 1 bis 4, dadurch gekennzeichnet, daß man die Adsorptionszone unter einem Druck zwischen $5 \cdot 10^5$ und $70 \cdot 10^5$ Pa, vorzugsweise zwischen $15 \cdot 10^5$ und $30 \cdot 10^5$ Pa, hält.

6. Verfahren nach einem der Ansprüche 1 bis 5, dadurch gekennzeichnet, daß man das zu reinigende Gasgemisch zunächst mit dem ersten, für Kohlendioxid und $C_1$-$C_8$-Kohlenwasserstoffe selektiven Adsorptionsmittel und dann in einem zweiten Schritt mit dem zweiten, Lithium enthaltenden Adsorptionsmittel vom Faujasittyp in Berührung bringt.

7. Verfahren nach einem der Ansprüche 1 bis 6, dadurch gekennzeichnet, daß man als erstes, für Kohlendioxid und $C_1$-$C_8$-Kohlenwasserstoffe selektives Adsorptionsmittel eine Aktivkohle, eine Vorfilterkohle, ein Silicagel oder ein Gemisch davon, vorzugsweise eine Aktivkohle, einsetzt.

8. Verfahren nach einem der Ansprüche 1 bis 7, dadurch gekennzeichnet, daß man als zweites Adsorptionsmittel einen zu mindestens 90% mit Lithium ausgetauschten Zeolithen vom Faujasittyp einsetzt.

9. Verfahren nach einem der Ansprüche 1 bis 8, dadurch gekennzeichnet, daß man als zweites Adsorptionsmittel einen Zeolithen vom Faujasittyp mit einem Si/Al-Verhältnis zwischen 1 und 1,2 und vorzugsweise von 1 einsetzt.

10. Verfahren nach einem der Ansprüche 1 bis 9, dadurch gekennzeichnet, daß man den Stickstoff zumindest teilweise an mindestens einer zwischen den Schüttungen des ersten und des zweiten Adsorptionsmittels angeordneten Schüttung eines dritten Adsorptionsmittels adsorbiert.

11. Verfahren nach Anspruch 10, dadurch gekennzeichnet, daß man als drittes Adsorptionsmittel einen Zeolithen, vorzugsweise einen Zeolithen vom Typ 5A, einsetzt.

12. Verfahren nach einem der Ansprüche 1 bis 11, dadurch gekennzeichnet, daß das Gewichtsverhältnis des ersten, mindestens für Kohlendioxid und $C_1$-$C_8$-Kohlenwasserstoffe selektiven Adsorptionsmittels zum zweiten Adsorptionsmittel vom Faujasittyp zwischen 10/90 und 85/15, vorzugsweise zwischen 50/50 und 80/20, liegt.

13. Verfahren nach einem der vorhergehenden Ansprüche, dadurch gekennzeichnet, daß man dabei einen Behandlungszyklus durchführt, bei dem man:

a) ein auf Wasserstoff basierendes, zumindest mit Kohlenmonoxid verunreinigtes und mindestens eine weitere Verunreinigung aus der Gruppe bestehend aus Kohlendioxid und $C_1$-$C_8$-Kohlenwasserstoffen enthaltendes Gasgemisch durch eine Adsorptionszone mit mindestens:

- einer ersten Adsorptionsmittelschüttung aus einem ersten, mindestens für Kohlendioxid und $C_1$-$C_8$-Kohlenwasserstoffe selektiven Adsorptionsmittel und
- einer zweiten Adsorptionsmittelschüttung aus einem zweiten Adsorptionsmittel, bei dem es sich um einen zu mindestens 80% mit Lithium ausgetauschten Zeolithen vom Faujasittyp mit einem Si/Al-Verhältnis unter 1,5 handelt,
führt;

b) das Kohlenmonoxid und die andere(n), auf dem zumindest ersten und zweiten Adsorptionsmittel adsorbierte(n) Verunreinigung(en) desorbiert, indem man in der Adsorptionszone einen Druckgradienten einstellt und den Druck fortschreitend verringert und so das Kohlenmonoxid und die andere(n) Verunreinigung(en) über den Eingang der Adsorptionszone zurückgewinnt und
c) den Druck in der Adsorptionszone durch Einleiten eines Stroms von reinem Wasserstoff über den Ausgang der Adsorptionszone wieder erhöht.

14. Verfahren nach Anspruch 13, dadurch gekennzeichnet, daß man in Stufe a) die Adsorptionszone unter einem Druck zwischen $5 \cdot 10^5$ und $70 \cdot 10^5$ Pa, vorzugsweise zwischen $15 \cdot 10^5$ und $30 \cdot 10^5$ Pa, und bei einer Temperatur zwischen 0 und 80°C hält.

FIG.1

FIG.2

FIG.3

FIG.4